# EUROPEAN PATENT APPLICATION

(11) **EP 4 621 963 A1**
(43) Date of publication of application: **24.09.2025**
(21) Application number: 23891213.3
(22) Date of filing: 05.10.2023
(51) Int. Cl.: H01M 50/289, H01M 50/209, H01M 50/262, H01M 50/264, H01M 50/291, H01M 50/293, H01M 50/296

(54) **BATTERY PACK**

(30) Priority: 16.11.2022 JP 2022183045
(71) Applicant: Vehicle Energy Japan Inc., Ibaraki 312-8505 (JP)
(72) Inventor: SUGAWARA, Tatsuo, Hitachinaka-shi, Ibaraki 312-8505 (JP)
(74) Representative: MERH-IP Matias Erny Reichl Hoffmann Patentanwälte PartG mbB
(86) International application number: PCT/JP2023/036416
(87) International publication number: WO 2024/106055

(57) **Abstract**

A battery pack having a plurality of battery blocks is manufactured at a low cost.

One example of a specific configuration of the present invention is as described below. A battery pack in which a first battery block having a configuration in which a plurality of first batteries 1 and a plurality of first spacers 20 are alternately arranged in a first direction and a second battery block having a configuration in which a plurality of second batteries 1 and a plurality of second spacers 20 are alternately arranged in the first direction are disposed in a direction at a right angle to the second direction, in which the first spacers and the second spacers are integrally formed through first linking portions, and inter-block side rails 70 that commonly press the first battery block and the second battery block in the first direction are disposed in the first linking portions 22 and 23.

## Description

### [Technical Field]

This invention relates to a battery pack having a plurality of battery blocks each having a plurality of batteries.

### [Background Art]

Conventionally, in the field of rechargeable secondary batteries, aqueous solution-based batteries such as a lead battery, a nickel-cadmium battery, a nickel-hydrogen battery have become mainstream. However, along with the progress in the size reduction and weight reduction of electrical equipment, lithium secondary batteries having a high energy density have attracted attention, and research, development, and commercialization thereof have been in rapid progress.

Incidentally, due to the problem of global warming or depleting fuel, each automobile manufacturer has developed electrical vehicles (EVs) or hybrid electrical vehicles (HEVs) in which part of driving is assisted with an electric motor, and there has been a demand for a high-capacity and high-output secondary battery as a power supply therefor. As a power supply that meets such a demand, non-aqueous solution-based lithium secondary batteries having a high voltage are attracting attention. Particularly, square lithium secondary batteries have an excellent volume efficiency at the time of being packed, and there is thus an increasing expectation of the development of square lithium secondary batteries for HEVs or for EVs.

In the case of modularizing a plurality of secondary batteries, there is a need to hold each battery cell in a state of being sandwiched by insulation spacers made of a resin or the like. Therefore, regarding the number of the insulation spacers, for N battery cells, N+1 insulation spacers are required at all times, and as an assembly method, there is a need to alternately stack and assemble battery cells and insulation spacers one by one.

The plurality of batteries are fastened in the arrangement direction, but each battery position changes before and after the fastening. PTL 1 describes a configuration regarding the disposition of batteries in which, for example, in a case where two battery blocks are fastened with a common fastening plate, it is ensured such that no stress is generated in each battery even when the positions of the batteries change. In PTL 1, even in a case where the fastening plate is common for the plurality of battery blocks, a spacer between the batteries is a separate component in each battery block.

### [Citation List]

### [Patent Literature]

[PTL 1] Japanese Patent Application Publication No. 2019-149227

### [Summary of Invention]

### [Technical Problem]

In the present invention, a combination of a battery and a spacer will be referred to as a battery block, and a combination of battery blocks will be referred to as a battery pack. A battery block is assembled by alternately overlapping battery cells and insulation spacers one by one. In the related art including PTL 1, since battery cells and insulation spacers are alternately overlapped and assembled one by one, the number of person-hours and the number of components increase as the number of battery cells increases. Therefore, the manufacturing cost is increased.

Furthermore, in a case where a sufficient output voltage cannot be obtained with one battery block, there is a need to further connect a plurality of battery blocks and use them as a battery pack. In such a case, in the related art, battery users, for example, automobile manufacturers need to connect the purchased battery blocks in-house.

Therefore, a step for configuring a battery block by combining a plurality of batteries with a spacer interposed therebetween and a step of disposing a plurality of such battery blocks to produce a battery pack impose a heavy burden on both battery manufacturers and battery users in terms of manufacturing cost. A problem of the present invention is to realize a configuration in which steps for forming such a battery pack are shortened and simplified as a whole and the manufacturing cost of the battery pack is reduced.

In other words, an object of the present invention is to provide a secondary battery module in which, even when the number of battery cells used has increased in a battery module in which a plurality of blocks, two or more blocks of battery cells, are used, it is possible to suppress an increase in the number of components such as accompanying insulation spacers and the number of person-hours required for assembling the insulation spacers.

### [Solution to Problem]

The present invention intends to solve the above-described problem, and the main configuration is as described below. That is, a plurality of battery blocks are assembled at the same time instead of individually assembling battery blocks. Specifically, a spacer that is disposed between a battery and a battery, an end plate, and a side plate for fastening are made to be common for blocks that configure a battery pack. In addition, for a battery pack, rather than each block, a plurality of blocks are assembled at the same time, whereby the number of person-hours is reduced. Specific means of the present invention is as described below.
(1) A battery pack in which a first battery block having a configuration in which a plurality of first batteries and a plurality of first spacers are alternately arranged in a first direction and a second battery block having a configuration in which a plurality of second batteries and a plurality of second spacers are alternately arranged in the first direction are disposed in a direction at a right angle to the second direction, in which the first spacer and the second spacer are integrally formed through a first linking portion, and an inter-block side rail that commonly presses the first battery block and the second battery block in the first direction is disposed in the first linking portion.
(2) The battery pack according to (1), in which first end plates are disposed at both end portions of the first battery block in the first direction, second end plates are disposed at both end portions of the second battery block in the first direction, and the inter-block side rail presses the first battery block in the first direction through the first end plate and presses the second battery block in the first direction through the second end plate.
(3) The battery pack according to (2), in which the first end plate and the second end plate are continuously formed through a second linking portion, and the inter-block side rail is disposed in the second linking portion.

### [Advantageous Effects of Invention]

According to the present invention, since the plurality of battery blocks are assembled at the same time, the cost of the assembly steps is significantly reduced. In addition, according to the present invention, since insulating sheets that sandwich and hold the battery cell are connected and integrated between the blocks, rather than in each block, it is also possible to reduce the number of components. Furthermore, since battery users purchase the plurality of battery blocks in a state of being already connected, it is possible to reduce the person-hours for connecting battery blocks.

### [Brief Description of Drawings]

[Fig. 1]

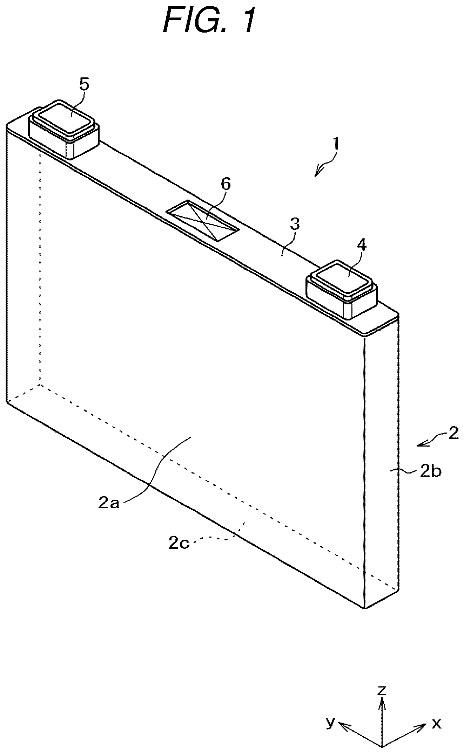

   Fig. 1 is a perspective view of a battery.
[Fig. 2]

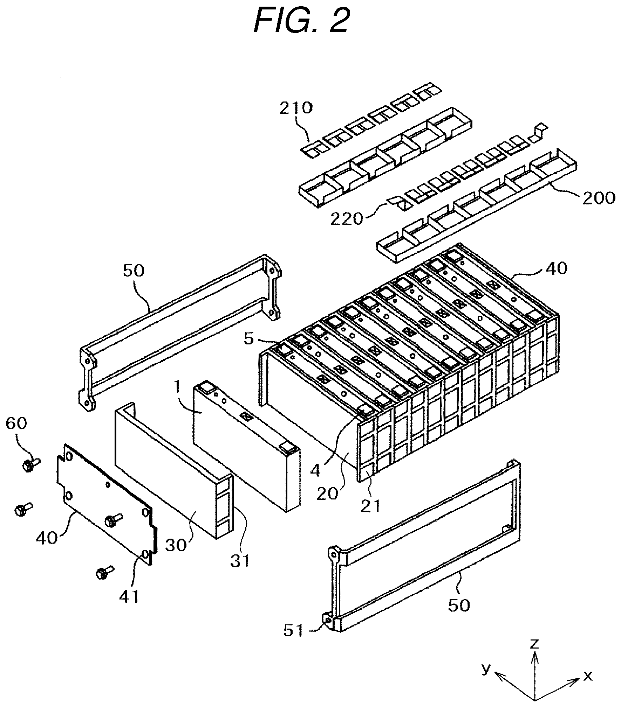

   Fig. 2 is an exploded perspective view of a battery block.
[Fig. 3]

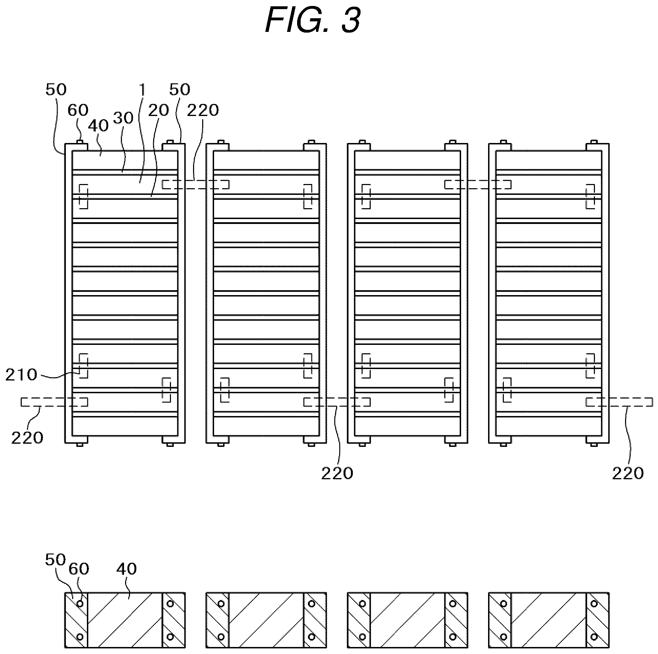

   Fig. 3 is a plan view of a battery pack in which four battery blocks are disposed in a comparative example.
[Fig. 4]

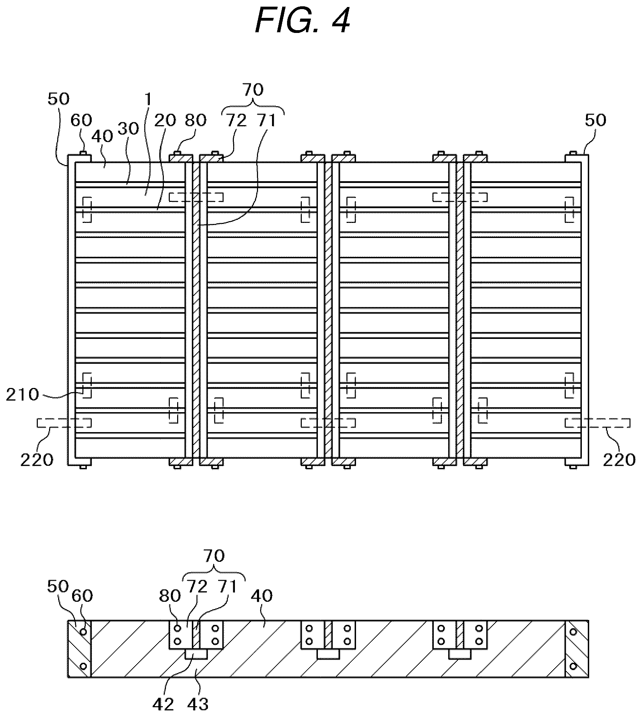

   Fig. 4 is a plan view of a battery pack in which four battery blocks are disposed in Example 1 of the present invention.
[Fig. 5]

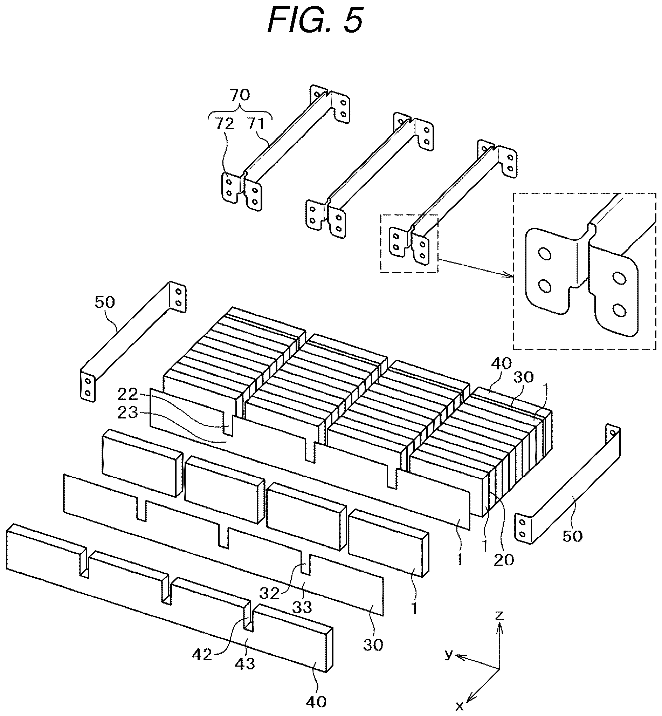

   Fig. 5 is an exploded perspective view of the battery pack in which four battery blocks are disposed in Example 1 of the present invention.
[Fig. 6]

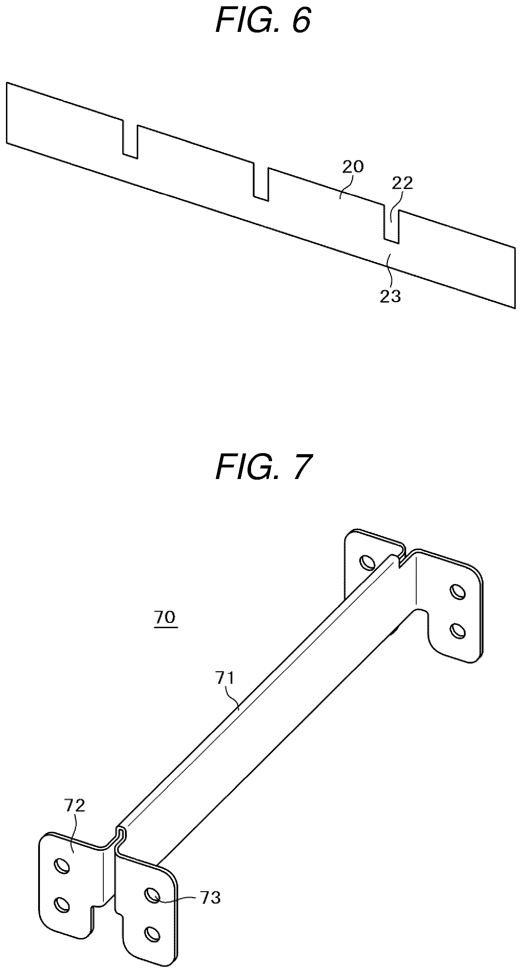

   Fig. 6 is a perspective view of a spacer of Example 1.
[Fig. 7]
   Fig. 7 is a perspective view of an inter-block side rail of Example 1.
[Fig. 8]

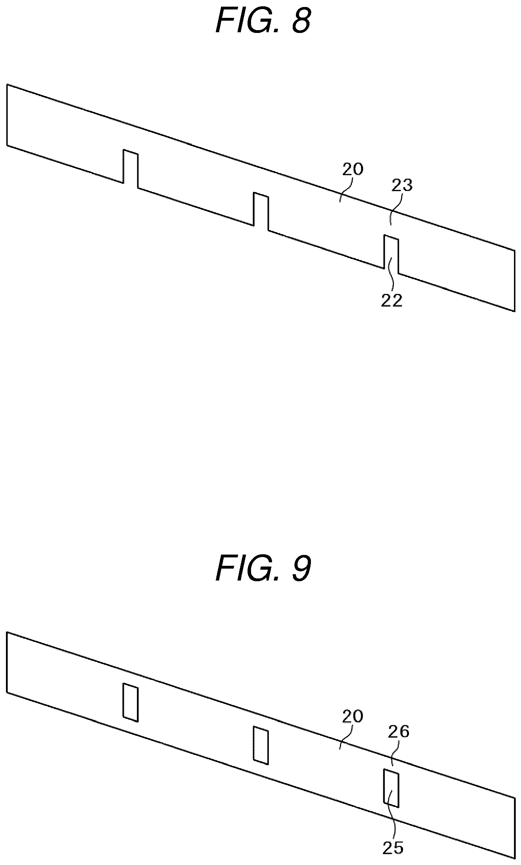

   Fig. 8 is a perspective view showing another example of the spacer.
[Fig. 9]
   Fig. 9 is a perspective view showing still another example of the spacer.
[Fig. 10]

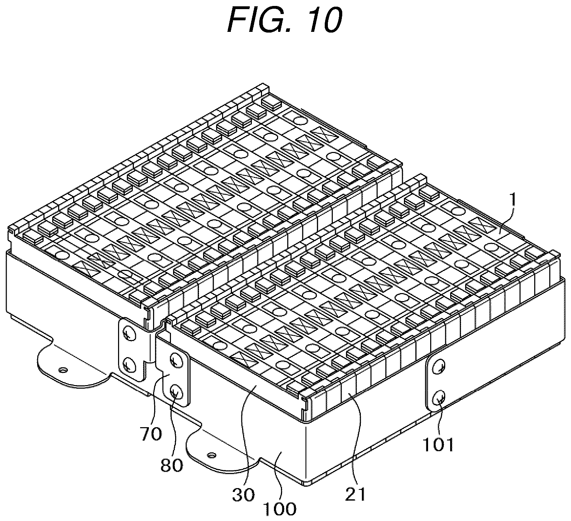

   Fig. 10 is a perspective view of a battery pack of Example 2.
[Fig. 11]

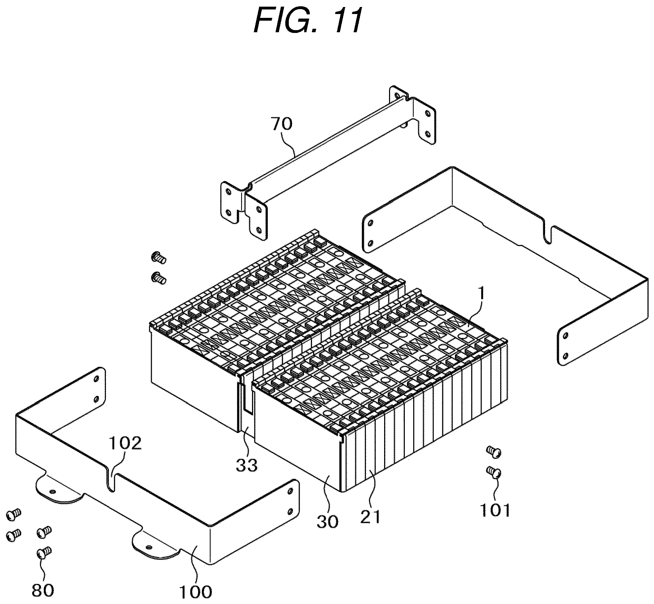

   Fig. 11 is an exploded perspective view of the battery pack of Example 2.
[Fig. 12]

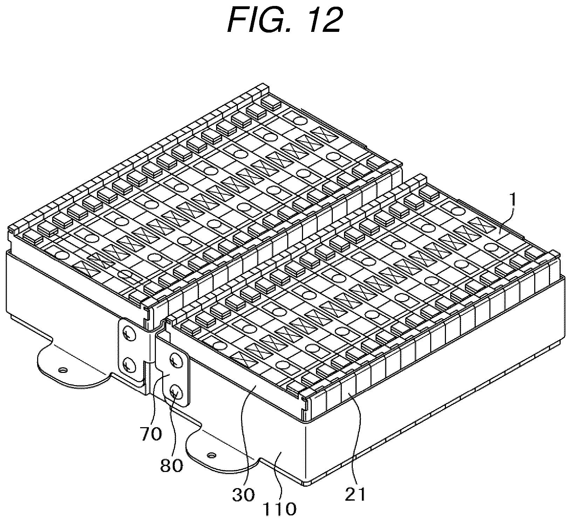

   Fig. 12 is a perspective view of a battery pack of Example 3.
[Fig. 13]

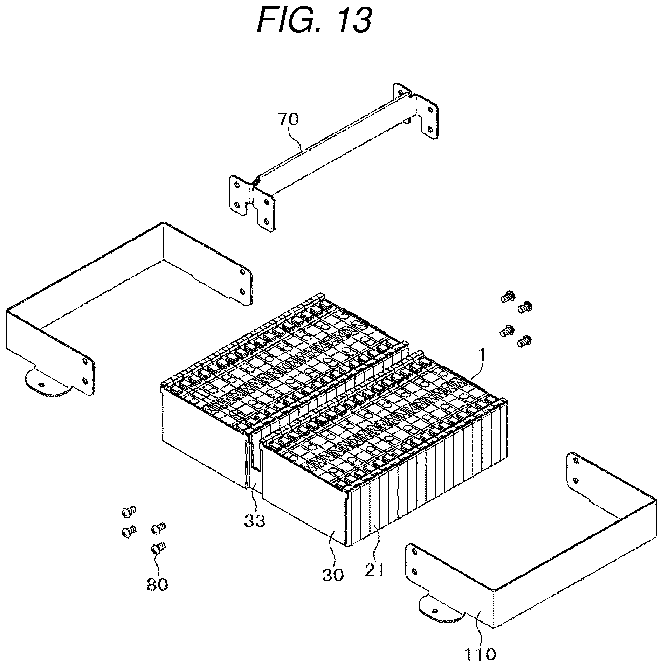

   Fig. 13 is an exploded perspective view of the battery pack of Example 3.
[Fig. 14]

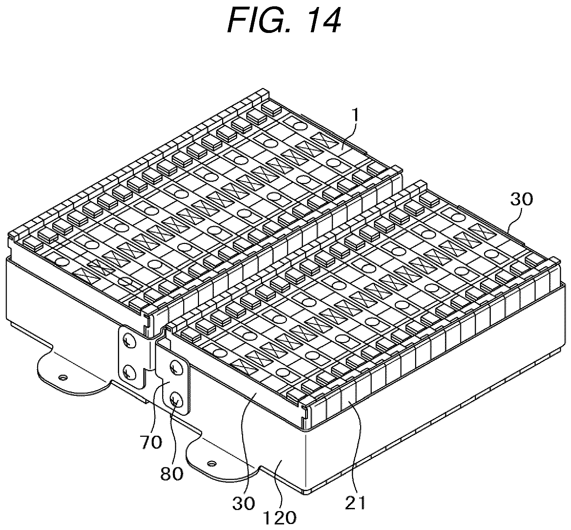

   Fig. 14 is a perspective view of a battery pack of Example 4.
[Fig. 15]

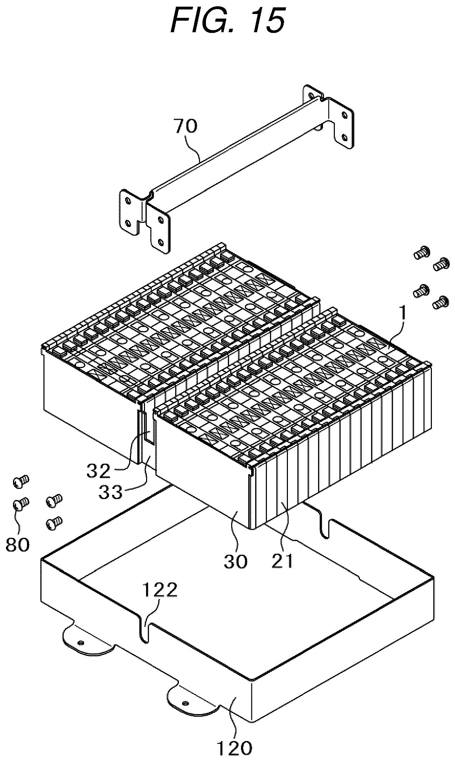

   Fig. 15 is an exploded perspective view of the battery pack of Example 4.

### [Description of Embodiments]

Hereinafter, the contents of the present invention will be described in detail using examples.

### [Example 1]

A feature of the present invention is a configuration in which a plurality of battery blocks can be formed at the same time, but an assembly configuration in a conventional single block will be first described as a comparative example.

Fig. 1 is a perspective view of a battery cell 1. As shown in Fig. 1, the battery cell 1 has a battery can 2, a battery lid 3, a positive electrode terminal 4, a negative electrode terminal 5, and a gas exhaust valve 6, and an electrolytic solution, a charge/discharge element, and an insulation case (not shown). As the battery cell 1, a secondary battery that can be charged and discharged such as a lithium-ion secondary battery is used. A battery cell 1 of a first embodiment corresponds to a single battery in the battery pack according to one embodiment of the present invention.

The battery can 2 has a rectangular cuboid shape in which one end of the internal space is open and is made of aluminum or an aluminum alloy. The battery can 2 has a pair of facing side plates 2a having a large area, a pair of facing side plate 2b having a small area, and a bottom plate 2c on a side opposite to the opening. In the internal space of the battery can 2, the charge/discharge element is housed in a state of being covered with the insulation case, and the electrolytic solution has been injected thereinto. A positive electrode of the charge/discharge element is connected to the positive electrode terminal 4, and a negative electrode of the charge/discharge element is connected to the negative electrode terminal 5.

The battery lid 3 has a rectangular flat plate shape that is the same as the bottom plate 2c, is made of aluminum or an aluminum alloy and blocks the opening portion of the battery can 2. The battery lid 3 is joined to the opening portion of the battery can 2 by joining means such as laser welding. In the central portion of the battery lid 3, the gas exhaust valve 6 is provided. When the battery cell 1 generates heat and gas due to an abnormality such as overcharging and the internal pressure of the battery can 2 increases to reach a predetermined pressure, the gas exhaust valve 6 splits open and exhausts the gas from the inside of the container, thereby reducing the internal pressure of the battery can 2.

In addition, at one side end portion and the other side end portion of the battery lid 3, through holes, not shown, have been formed, and the positive electrode terminal 4 and the negative electrode terminal 5 have been installed. Portions of the positive electrode terminal 4 and the negative electrode terminal 5 that are exposed to the outside from the battery lid 3 are each formed as a rectangular cuboid and each have a flat top surface. Electricity generated in the battery cell 1 is supplied to an external device through the positive electrode terminal 4 and the negative electrode terminal 5 or electricity generated outside is supplied to the charge/discharge element through the positive electrode terminal 4 and the negative electrode terminal 5, whereby the battery cell 1 is charged.

Fig. 2 is an exploded perspective view of a battery block. As shown in Fig. 2, the battery block has a plurality of battery cells 1 and spacers 20 arranged together, a pair of end spacers 30, a pair of end plates 40, and a pair of side rails 50.

The spacers 20 are made of an insulating synthetic resin, as shown in Fig. 2, are alternately sandwiched between the adjacent battery cells 1 and arranged in an x direction together with the battery cells 1. Each spacer 20 has a protrusion portion 21 that extends in the x direction at an end portion, and the battery cell 1 is held in a recess portion that is formed of the protrusion portion 21 and regulated in an y direction and a Z direction. In the present specification, the x direction will be regarded as a first direction in some cases, and a second direction at a right angle to the x direction will also be referred to as the y direction.

The end spacer 30 basically has the same configuration as the spacer 20. That is, the end spacer 30 is made of an insulating synthetic resin and is disposed on the outside of the battery cell 1 that is positioned in the outermost portion. Since the battery cell 1 is disposed on only one side of the end spacer 30, a protrusion 31 has been formed on only one side of the end spacer 30.

The end plate 40 is disposed on the outside of the end spacer 30. The end plates 40 on both sides are pressed in the x direction with the side rails 50, and an arrangement of the battery cells 1 and the spacers 20 is fixed. The end plate may be formed of a metal or may be formed of a resin. In any cases, the material needs to have a mechanical strength for stably fastening the arrangement of the battery cells 1 and the spacers 20.

In Fig. 2, the arrangement of the battery cells 1 and the spacers 20 is fastened and fixed in the x direction with screws 60 after holes 51 in the side rails 50 and holes 41 in the end plates are aligned together. The side rail 50 is normally formed of metal.

In Fig. 2, busbar covers 200 formed of an insulating material such as a resin are disposed correspondingly to the terminals 4 and 5 formed in the battery cells 1. The battery cells 1 are disposed so that the terminals of the adjacent battery are a pair of a positive electrode or a negative electrode. In addition, the positive electrode 4 and the negative electrode 5 of the adjacent batteries are connected to each other through a busbar 210. To the terminal on the outermost side of each block, an end busbar 220 is connected, and a different battery block or an external circuit is connected.

The battery block is often used in a state where the plurality of battery cells 1 are connected together in series, but there are cases where a sufficient output voltage cannot be obtained even when the battery cells are connected together in series. In this case, a plurality of the battery blocks are used in a state of being connected together in series. In a case where there is a need to increase the output current, the battery blocks are connected together in parallel. This is about a problem of connection between terminals, and the present invention can be applied in any cases.

The upper view of Fig. 3 is a plan view showing a state where four battery blocks are disposed in parallel and connected together in series. In Fig. 3, each battery block has been individually assembled. In Fig. 3, the battery cells 1 and the spacers 20 have been alternately arranged together. In Fig. 3, the protrusions that are formed at the end portions of the spacers 20 are not shown to prevent the view from becoming complicated. The arrangement of the battery cells 1 and the spacers 20 is fixed by being sandwiched by the end spacers 30 and the end plates 40 and being pressed by the side rails 50.

In the battery cell 1 of Fig. 3, the positive electrode terminal 4, the negative electrode terminal 5, the gas exhaust valve 6, an electrolytic solution injection hole, a plug 7, and the like are not shown. The batteries adjacent to each other have been arranged to be horizontally flipped so that the positive electrode terminal and the negative electrode terminal of each of the adjacent batteries 1 come adjacent to each other. In Fig. 3, the positive electrode terminals and the negative electrode terminals that are adjacent to each other are connected together with the busbars 210. To the terminal at the end portion of each block, the end busbar 220 has been connected. The end busbar 220 is connected to the battery terminal of the adjacent battery blocks or connected to the terminal of an external device.

The lower view of Fig. 3 is a front view of each battery block. In Fig. 3, the flange portions of the side rails 50 are arranged on the end plate 40, holes formed in the flange portions and holes in the end plate are aligned together, and the arrangement of the battery cells 1 and the spacers 20 are sandwiched, pressed and fixed with the screws 60.

In the configuration of Fig. 3, the four battery blocks are each individually manufactured by battery manufacturers. Therefore, the manufacturing cost becomes four times the manufacturing cost of one battery block. In addition, users perform a work of connecting the four battery blocks. Therefore, a corresponding burden is imposed on the users as well.

Fig. 4 is a plan view and a front view of the battery pack according to Example 1 of the present invention. In Fig. 4 as well, the protrusions of the spacers 20 are not shown to prevent the view from becoming complicated. A feature in Fig. 4 is that four battery blocks are formed at the same time as a unit. In Fig. 4, the spacer 20 that is disposed between the battery cells 1 is formed as a unit for four battery cells. Between the spacers, four battery cells 1 are arrayed. The end spacers 30 and the end plates 40 that sandwich the battery cells 1 and the spacers 20 from both sides are also formed as a unit for four sets.

In Fig. 4, notches are formed in the spacers 20, the end spacers 30, and the end plates 40, and extension portions 71 of inter-block side rails 70 pass through these notches. Flange portions 72 of the inter-block side rails 70 press the end plates 40 on the outside of the end plates 40 with screws 80, whereby the battery blocks are pressed from both sides and fixed. In Fig. 4, Fig. 5, and the like, the pressing has been described as tightening, but the pressing is a broader concept than tightening. For example, the pressing may be performed by fastening or the like instead of using screws or the like.

The same structures are formed in the boundary portions between the individual battery blocks, that is, three places. The battery blocks that are disposed on the outside have the same appearance as Fig. 3 and are fastened with the side rails 50. In addition, a method for disposing the battery cells 1 is the same as shown in Fig. 3. Therefore, the disposition of the busbars 210 and the end busbars 220 is basically the same as shown in Fig. 3. In Fig. 4, the battery pack is composed of the four battery blocks, but terminals that are connected to the outside are only the two end busbars 220 that are disposed in the battery blocks at both ends.

The lower view of Fig. 4 is a front view of the battery pack according to Example 1. In the front view of Fig. 4, the end plate 40 has been formed as a unit for the four battery blocks. In the end plate 40, notches 42 are formed in the boundary portions between the battery blocks, and the extension portions 71 of the inter-block side rails 70 have been disposed in these notch 42 portions. Flange portion 72 of the inter-block side rails 70 are in contact with the external surface of the end plate 40 and are pressed with the screws 80. The two battery blocks are pressed and fixed with the end plate 40 and the inter-block side rails 70 when the screws 80 are pressed.

In the front view of Fig. 4, portions where the notches 42 of the end plate 40 have been formed have a small width. These portions are called connection portions 43. The connection portions 43 can also be referred to as linking portions 43. The connection portion 43 has a small bending strength or section modulus compared with other portions of the end plate 40. Therefore, even in a case where a dimensional error is caused between the battery blocks, stress is relieved in these connection portions 43.

Fig. 5 is an exploded perspective view of Example 1. In Fig. 5, four battery blocks have been integrally formed. As shown in Fig. 5, the battery cells 1 and the spacers 20 have been alternately arranged in the x direction (also referred to as the first direction in some cases). In Fig. 5, the spacer 20 has a smaller thickness than the battery cell 1 and is described as one sheet. In addition, protrusions 21 formed in the spacers 20 are not shown to prevent the view from becoming complicated.

In Fig. 5, the spacer 20 has been formed to be common to the four battery blocks. In the spacer 20, notches 22 have been formed in the boundary portions between the individual blocks, and the extension portions 71 of the inter-block side rails 70 pass through these notch 22 portions. In the spacer 20, connection portion 23 in the portions where the notches 22 have been formed have a small bending strength or section modulus compared with other portions, and thus even in a case where a dimensional error is caused between battery blocks, it is possible to reduce stress in these connection portions.

This feature is also the same in the end spacer 30. The end spacer 30 is formed to be common to the four battery blocks, and notches 32 have been formed in the boundary portions. In the portions where the notches 32 have been formed, the end spacer 30 has a small width and has a small bending strength or section modulus compared with other portions. Therefore, even in a case where a dimensional error is caused between the block batteries, it is possible to absorb stress in these connection portions 33.

The configuration of the end plate 40 is as described in Fig. 4. The end plate 40 is also basically the same as the spacer 20 and the end spacer 30. The extension portions 71 of the inter-block side rails 70 shown in Fig. 5 are inserted into the notches 22 of the spacer 20, the notches 32 of the end spacer 30, and the notches 42 of the end plate 40, the two end plates 40 are pressed with the flange portions 72 of the inter-block side rails 70 in the arrangement direction (x direction), and the arrangement structure of the battery cells 1 and the spacers is fixed.

In Fig. 5, on the outsides of the battery blocks on both sides in the y direction (also referred to the direction at a right angle to the first direction in some cases), as in the related art, the two end plates 40 are pressed with the side rails 50, and the battery cells 1 and the spacers 20 have been fixed in the arrangement direction. In Fig. 5, the spacers 20, the end spacers 30, and the end plates 40 are as large as the four battery cells 1, but these materials are formed by the molding of a resin. Therefore, once a mold is designed, mass production is easy, and thus the cost does not significantly increase in spite of the increased sizes. Conversely, the cost reduction effect increases as much as the number of components decreases.

The end plate 40 is often formed of metal, and in this case, the metal is press-molded or die cast-molded. Even in the case of press molding, once a pressing mold is manufactured, mass production is easy. Therefore, even in a case where the end plate is formed of metal, the cost reduction effect by a decrease in the number of components is large rather than a cost increase factor by the enlargement of the component.

Fig. 6 is a perspective view of the spacer 20 that is used in the present invention. The spacer 20 in Fig. 6 is a spacer for four battery blocks. In Fig. 6, the protrusion of the spacer 20 is not shown. In Fig. 6, the notches 22 have been formed in portions in the spacer 20 corresponding to the boundary portions between the battery blocks. The extension portions 71 of the inter-block side rail 70 are inserted into these notch 22 portions, whereby the arrangement of the battery cells 1 and the spacers 20 is pressed and fixed.

In Fig. 6, in the portions where the notches 22 are formed, the spacer 20 has a small width, and this portion is referred to as the connection portion 23 in the present specification. In other words, this connection portion 23 is a mechanically weak portion, and even in a case where a slight dimensional error is caused between the battery blocks due to a manufacturing error, this connection portion 23 deforms, and stress is thereby relieved. That is, it is possible to use the connection portions 23 as mechanical buffers.

It is possible to actively use the connection portions 23 as a buffer in the configuration. As one configuration, in order to further decrease the mechanical strength of the connection portion 23, the plate thickness of the spacer in the connection portion 23 can be made smaller than those of other portions. That is, regarding the connection portion 23, a decrease in the mechanical strength of the connection portion 23 in the spacer 20 does not lead to any problem of reliability since the spacer 20 simply needs to be integrally present when the battery cells 1 are combined into the block.

An example of different means for using the connection portions 23 in the spacer 20 as a buffer is that, in the spacer 20, only the connection portion is formed of an elastic body such as rubber or polypropylene as the material thereof. In addition, the portion serving as the spacer 20 is formed of an insulating resin. Such a configuration can be formed using, for example, a method of two-color molding. Such a configuration is also the same for the end spacer 30 and the end plate 40.

Fig. 7 is a perspective view of the inter-block side rail 70 that is inserted into the notch portion 22 of the spacer 20 or the like. In Fig. 7, the extension portion 71 of the inter-block sider rail 70 is inserted into the notch portion of the spacer 22 or the like. The flange portion 72 is brought into contact with the end plate 40 and pressed by plugging screw holes 73 formed in the flange portion 72 and screw holes formed in the end plate 40 with the screws 80, and the battery cells 1 and the spacers 20 are tightened, whereby the arrangement of the battery cells 1 and the spacers 20 is fastened.

The inter-block side rail 70 can be formed by a variety of methods. Fig. 7 is an example in which one metal sheet has been formed by sheet metal processing. That is, a shape corresponding to the developed plane of the inter-block side rail 70 is made by, for example, pressing. After that, the metal sheet is bent and can be processed into a shape as shown in Fig. 7. The step is basically the same as the manufacturing step of the side rail 50 while the shape is different.

The inter-block side rail 70 shown in Fig. 7 is an example, and there are a variety of different variations. The processing method does not necessarily need to be sheet metal processing, and it is also possible to use means in which the extension portion 71 and the flange portion 72 of the inter-block side rail 70 are separately manufactured and then fixed or the like by welding, fixation with screws, or fastening. Furthermore, for the fixation of the extension portion 71, the extension portion may be directly installed on the end plate 40 by means such as welding, fixation with screws, or fastening.

Fig. 6 is an example in which the notches 22 have been formed in the upper side of the spacer 20. However, the notches 22 may also be formed in the lower side of the spacer 20 as shown in Fig. 8 depending on a layout request. In this case, the connection portion 23 is disposed in the upper side of the spacer, but the action is basically the same as described regarding Fig. 6. In addition, even in the configuration of Fig. 8, it is possible to use the same configuration as the inter-block side rail 70 of Fig. 7.

Fig. 9 is an example of the case of forming holes 25 instead of notches in the spacer 20 in portions corresponding to the boundary portions between the battery blocks. In this case, the inter-block side rails are inserted into these holes 25. Therefore, it is not possible to use the same inter-block side rail as in Fig. 7. For example, the extension portion 71 of the rod-like inter-block side rail 70 having a cross section similar to the hole 25 of the spacer 20 is inserted, and the flange portion 72 is installed on the extension portion 71 of the inter-block side rail 70 on the outside of the end plate 40 by means such as screw fastening, fastening, or welding. In addition, the arrangement of the battery cells 1 and the spacers 20 is pressed in the arrangement direction using this flange portion 72.

In the present example, four examples have been described, but the present invention is not limited thereto. The battery pack can be configured using at least two battery blocks.

In the present example, the connection portion 43 is used in the description as one example of a fastening portion of the present invention. In the present example, the end plate, the spacer, and the end spacer have the notched structure. Those are integrally formed, whereby the number of components decreases, which is preferable. On the other hand, regarding these portions, it is also possible to configure the plurality of end plates, spacers, and end spacers to be connected together with connection members. Components corresponding to each of the battery blocks can be individually manufactured, and the present invention can also be thus applied to battery packs in which the number of battery blocks is different.

### [Example 2]

Fig. 10 is a perspective view of a battery pack of Example 2. A difference of a configuration of Fig. 10 from the configuration of Example 1 is that end plates and side rails have formed an integrated component 100. In Fig. 10, not four but two battery blocks have been disposed in parallel. However, even in Fig. 10 as well, similar to Example 1, spacers and end spacers have been integrated with respect to the two battery blocks. In Fig. 10, the battery cells 1 and the spacers 20 have been alternately arranged in the arrangement direction, but the spacers 20 are not shown. Instead, the protrusions 21, which are parts of the spacers 20, are shown at the end portions of the blocks.

In Fig. 10, there are two battery blocks, but the spacers have been integrated as shown in Fig. 5 and the like of Example 1, and the battery cells have been assembled at the same time with respect to the two battery blocks. Each of the two battery blocks has been sandwiched by the two end spacers 30.

A difference in Fig. 10 from Example 1 is that the end plates and the side rails have formed the integrated component 100. However, it is the same as in Example 1 that the integrated component 100 is also pressed in the arrangement direction and fastened with the inter-block side rails 70. The two integrated components 100 have been connected together with screws 101.

Fig. 11 is an exploded perspective view of Fig. 10. In Fig. 11, two end plates and two side rails have been replaced by two c-like sheet-shaped integrated components 100. The integrated component 100 has a monotonous shape obtained by only bending a plate-shaped component. Therefore, the integrated component can be manufactured at a low cost. The two integrated components 100 have been connected together with screws 101.

A configuration of Fig. 11 is also the same as that in Example 1 in that the arrangement structure of the battery cells 1 and the spacers 20 has been pressed in the arrangement direction with the inter-block side rails 70. That is, the inter-block side rails are inserted into the notches of the spacers 20, the end spacers 30, and the integrated components 100, and the arrangement structure is fastened by being pressed from the outsides of the integrated components 100.

### [Example 3]

Fig. 12 is a perspective view of a battery pack of Example 3, and Fig. 13 is an exploded perspective view of the battery pack of Example 3. In Fig. 12 and Fig, 13 as well, end plates and side rails have formed an integrated component 110. A difference of configurations in Fig. 12 and Fig. 13 from Fig. 10 of Example 2 is the shape of the integrated component 110. In Fig. 12 and Fig, 13, the two integrated components 110 have been connected together with the screws 80 in the flanges of the inter-block side rails 70.

That is, the screws 80 press the battery cells 1 and the spacers 20 in the arrangement direction and fix the integrated components 110 at the same time. Compared with the structure of Example 2, the structure of Example 3 makes it possible to omit the screw fastening step of Fig. 11 in which the screws 101 are used. The other configurations of Example 3 are the same as described in Example 2.

### [Example 4]

Fig. 14 is a perspective view of a battery pack of Example 4. In Fig. 14 as well, end plates and side rails have formed an integrated component. However, while the end plates and the side rails have configured two integrated components in the configurations of Example 2 and Example 3, in Example 4, only one component has been assembled. That is, in Example 4, an integrated component 120 of the end plates and the side rails is a square sheet-like frame, and the arrangement of the battery cells 1 and the spacers 20 is inserted into this frame. In addition, the fact that the arrangement of the battery cells 1 and the spacers 20 is pressed and fastened with the inter-block side rails 70 is the same as in Examples 2 and 3.

Fig. 15 is an exploded perspective view of the battery pack of Example 4. As shown in Fig. 15, the integrated component 120 of the end plates and the side rails has formed a sheet-shaped rectangular frame body. However, in the integrated component 120, notches 122 have been formed in portions corresponding to the notches of the spacers 20 and the notches of the end spacers 30.

The inter-block side rails 70 are inserted into these notch 122 portions, the arrangement of the battery cells 1 and the spacers 20 is pressed with the screws 80, and the battery block is fastened. The other configurations of Example 4 are the same as described in Example 2 and Example 3. In Example 4, the end plates and the side rails form one integrated component 120, and it thus becomes possible to further reduce the manufacturing cost.

### [Reference Signs List]

- 1: Battery cell
- 2: Battery can
- 3: Battery lid
- 4: Positive electrode terminal
- 5: Negative electrode terminal
- 6: Gas exhaust valve
- 20: Spacer
- 21: Protrusion at spacer end portion
- 22: Spacer notch
- 23: Spacer connection portion
- 30: End spacer
- 31: Protrusion at end spacer end portion
- 32: End spacer notch
- 33: End spacer connection portion
- 40: End plate
- 42: End plate notch
- 43: End plate connection portion
- 50: Side rail
- 60: Screw
- 70: Inter-block side rail
- 71: Extension portion
- 72: Flange portion
- 73: Hole
- 80: Screw
- 100: Integrated component of end plates and side rails of Example 2
- 101: Screw
- 102: Notch
- 110: Integrated component of end plates and side rails of Example 3
- 101: Screw
- 102: Notch
- 120: Integrated component of end plates and side rails of Example 4
- 122: Notch
- 200: Busbar case
- 210: Busbar
- 220: End busbar

## Claims

1. A battery pack in which a first battery block having a configuration in which a plurality of first batteries and a plurality of first spacers are alternately arranged in a first direction and
a second battery block having a configuration in which a plurality of second batteries and a plurality of second spacers are alternately arranged in the first direction are disposed in a direction at a right angle to the first direction, wherein
the first spacers and the second spacers are integrally formed through first linking portions, and
an inter-block side rail that commonly presses the first battery block and the second battery block in the first direction is disposed in the first linking portion.

2. The battery pack according to claim 1, wherein first end plates are disposed at both end portions of the first battery block in the first direction,
second end plates are disposed at both end portions of the second battery block in the first direction, and
the inter-block side rail presses the first battery block in the first direction through the first end plate and presses the second battery block in the first direction through the second end plates.

3. The battery pack according to claim 2, wherein the first end plates and the second end plates are continuously formed through second linking portions, and
the inter-block side rail is disposed in the second linking portions.

4. The battery pack according to claim 1, wherein the inter-block side rail has an extension portion that extends in the first direction and a flange portion that extends in a direction at a right angle to the first direction, and
the extension portion is inserted into the first linking portions.

5. The battery pack according to claim 2, wherein the inter-block side rail has an extension portion that extends in the first direction,
a first flange portion that extends in a direction at a right angle to the first direction at a first end portion of the extension portion, and
a second flange portion that extends in the direction at a right angle to the first direction at a second end portion on an opposite side to the first end portion of the extension portion,
the first battery block is pressed with the first flange portion and the second flange portion through the first end plates, and
the second battery block is pressed with the first flange portion and the second flange portion through the second end plates.

6. The battery pack according to claim 3, wherein the inter-block side rail has an extension portion that extends in the first direction,
a first flange portion that extends in a direction at a right angle to the first direction at a first end portion of the extension portion, and
a second flange portion that extends in the direction at a right angle to the first direction at a second end portion on an opposite side to the first end portion of the extension portion,
the extension portion is inserted into the second linking portions,
the first battery block is pressed with the first flange portion and the second flange portion through the first end plates, and
the second battery block is pressed with the first flange portion and the second flange portion through the second end plates.

7. The battery pack according to any one of claims 4 to 6, wherein a slit is formed in each of the first linking portions, and
the extension portion of the inter-block side rail is inserted into the slits.

8. The battery pack according to any one of claims 3 to 6, wherein a slit is formed in each of the second linking portions, and
the extension portion of the inter-block side rail is inserted into the slits.

9. The battery pack according to any one of claims 1 to 8, wherein the side rail is formed by bending one metal sheet.

10. The battery pack according to any one of claims 4 to 8, wherein the flange portion and the extension portion are connected together by welding, fastening, or screw fastening.

11. The battery pack according to any one of claims 1 to 10, wherein a bending strength of the first linking portions is smaller than bending strengths of the first spacers and the second spacers.

12. The battery pack according to any one of claims 2 to 10, wherein a bending strength of the second linking portions is smaller than bending strengths of the first end plates and the second end plates.

13. The battery pack according to any one of claims 1 to 12, wherein the first spacers and the second spacers are formed of a resin.

14. The battery pack according to any one of claims 2 to 13, wherein the first end plates and the second end plates are formed of a metal or a resin.

15. The battery pack according to any one of claims 1 to 14, wherein there are only two terminals that are connected to an outside form the battery pack.
